# EUROPÄISCHE PATENTSCHRIFT

(11) **EP 1 491 862 B1**
(45) Veröffentlichungstag und Bekanntmachung des Hinweises auf die Patenterteilung: **10.06.2015**
(21) Anmeldenummer: 04012173.3
(22) Anmeldetag: 22.05.2004
(51) Int. Cl.: G01D 11/24, F16K 37/00, G01D 5/14

(54) **Magnetische Positionserfassungsvorrichtung für Ventile**
Magnetic position detection apparatus for valves
Appareil de détection magnétique de position pour vannes

(30) Priorität: 25.06.2003 DE 10328422
(43) Veröffentlichungstag der Anmeldung: 29.12.2004
(73) Patentinhaber: FESTO AG & Co. KG, 73734 Esslingen (DE)
(72) Erfinder: Kühbauch, Heiko, 73257 Köngen (DE); Lederer, Thomas, 71394 Kernen (DE)
(74) Vertreter: Patentanwälte Magenbauer & Kollegen Partnerschaft mbB

(56) Entgegenhaltungen:
- EP-A- 1 184 611
- DE-A- 10 054 308
- DE-A- 19 710 028
- DE-U- 20 003 631
- DE-U- 20 219 497
- US-A- 5 769 043

## Beschreibung

Die Erfindung betrifft eine Positionserfassungsvorrichtung für eine fluidtechnische Ventilanordnung, mit einer ortsfesten magnetischen Sensoranordnung zum Erfassen der Postition eines beweglichen Ventilglieds der Ventilanordnung, wobei ein ortsfester Magnet derart bei der Sensoranordnung angeordnet ist, dass bei einer Stellung des Ventilglieds innerhalb eines vorbestimmten Erfassungsbereichs ein magnetischer Kreis von dem Magneten über das Ventilglied zu der Sensoranordnung gebildet wird, so dass die Sensoranordnung ein die Stellung des Ventilglieds in dem Erfassungsbereich repräsentierendes Positionssignal ausgibt.

Eine derartige Positionserfassungsvorrichtung ist beispielsweise aus der DE 100 54 308 bekannt. Die Ventilanordnung bildet beispielsweise ein Gaswechselventil für einen Kraftfahrzeugmotor. Der Magnet ist im Gehäuse des Ventils integriert und nahe einem Magnetfeldsensor angeordnet. Ein oszillierendes Aktorteil bildet zusammen mit einem Flussleitblech und einem Magneten einen magnetischen Kreis, in dem der Magnetfeldsensor angeordnet ist. Die vom Magnetfeldsensor sensierte Intensität des magnetischen Flusses ist dabei von der Position des oszillierenden Aktorteils abhängig.

Ferner sind aus der US 5,769,043, der DE 197 10 028 A1 sowie der DE 200 03 631 U1 ortsfeste Magneten bekannt, die mit einer Positionssensoranordnung zusammenwirken, um die Position eines bewegten Messobjektes zu erfassen.

In der europäischen Offenlegungsschrift 1 184 611 A2 ist eine Positionserfassungsvorrichtung beschrieben, die ein Mehrfachventil mit einem magnetischen Glied enthält, beispielsweise dem Antriebskolben des Ventilglieds, dessen Position durch einen magnetisch betätigbaren Sensor erfasst wird. Der Sensor ist in einem Gehäuse des Mehrfachventils angeordnet. Zwar könnte der Sensor bei einer alternativen Bauform des Mehrfachventils auch weggelassen werden. Allerdings ist stets ein magnetisches Ventilglied notwendig, um bei einer gegebenenfalls nachträglichen Bestückung des Mehrfachventils mit einem magnetischen Sensor eine Positionserfassung zu ermöglichen. Die Herstellung eines magnetischen Ventilgliedes ist teuer, insbesondere in dem Fall, wenn in einer Serie Ventilanordnungen mit und ohne Positionserfassung produziert werden sollen.

Es ist die Aufgabe der Erfindung, eine Positionserfassungsvorrichtung zu schaffen, die bei einer fluidtechnischen Ventilanordnung nachrüstbar ist.

Diese Aufgabe wird durch eine Positionserfassungsvorrichtung gemäß der technischen Lehre des Anspruchs 1 gelöst.

Die Sensoranordnung ist in einem vom Gehäuse der fluidtechnischen Ventilanordnung separaten Gehäuse angeordnet. Dieses Gehäuse kann beispielsweise ein am Gehäuse der fluidtechnischen Ventilanordnung anordenbares Modul bilden, so dass die Positionserfassungsvorrichtung modular ausgestaltet ist. In dem Modul ist vorteilhafterweise mindestens einer der ortsfesten Magneten angeordnet. Vorzugsweise sind alle ortsfesten Magneten in dem Modul angeordnet.

Im Unterschied zur bekannten Positionserfassungstechnik kann die Sensoranordnung mit dem Magnet nachgerüstet werden. Die Sensoranordnung kann unterschiedliche magnetische Sensoren enthalten, beispielsweise einen magnetoresistiven Sensor, oder einen Reed-Kontakt. Der magnetoresistive Sensor sowie der Hall-Sensor ermöglichen die Bereitstellung eines wegabhängig kontinuierlich veränderlichen Positionssignals. Der Reed-Kontakt ist für die Erfassung einer vorbestimmten Position des Ventilglieds vorgesehen. Der Magnet ist beispielsweise ein Permanentmagnet. Prinzipiell wäre aber auch ein Elektromagnet möglich. Der Magnet erzeugt ein magnetisches Feld, das über das Ventilglied, beispielsweise über dessen Betätigungskolben, zur Sensoranordnung gelangt und von dieser erfasst wird.

Der magnetische Kreis kann bei einer einzigen vorbestimmten Stellung des Ventilglieds innerhalb des Erfassungsbereichs geschlossen sein. Es ist aber auch eine kontinuierliche, wegabhängige Positionsbestimmung des Ventilglieds innerhalb des Erfassungsbereiches möglich. Jedenfalls ist die Erfassungschwelle der Sensoranordnung, beispielsweise eine Grenzfeldstärke, bei der ein magnetoresistiver Sensor anspricht, bei der Stellung des Ventilglieds in dem Erfassungsbereich überschritten, so dass die Sensoranordnung das Positionssignal erzeugen kann.

Eine Ventilanordnung hat beispielsweise jeweils ein Ventilglied. Es sind aber auch Ventilanordnungen denkbar, die mehrere Ventilglieder enthalten, deren Position durch eine erfindungsgemäße Positionserfassungsvorrichtung erfassbar ist.

Vorteilhafte Ausgestaltungen der Erfindung ergeben sich aus den abhängigen Ansprüchen sowie aus der Beschreibung.

Vorzugsweise ist eine magnetische Leiteranordnung vorhanden, über die der magnetische Kreis bei der Stellung des Ventilglieds innerhalb des vorbestimmten Erfassungsbereichs verläuft. Beispielsweise ein weichmagnetisches Flussleitstück, z.B. aus Weicheisen, vorgesehen. Zweckmäßigerweise weist die magnetische Leiteranordnung zwei oder mehr voneinander separate Flussleitelemente auf, über die magnetische Kreis von dem Magneten zu dem Ventilglied und von dem Ventilglied zu der Sensoranordnung geführt wird.

Es versteht sich, dass auch mehrere Magneten zur Bildung des von der Sensoranordnung erfassbaren magnetischen Kreises vorgesehen sein können.

Der Magnet und/oder die magnetische Leiteranordnung sind zweckmäßigerweise an der Sensoranordnung angeordnet. Somit sind im wesentlichen alle ortsfesten Teile zusammengefasst. Es versteht sich, dass auch Teile der magnetischen Leiteranordnung von der Sensoranordnung separat sein können, beispielsweise einen Bestandteil des Gehäuses der Ventilanordnung bilden können.

Die magnetische Leiteranordnung kann ganz oder teilweise am Gehäuse der Ventilanordnung angeordnet sein. Die magnetische Leiteranordnung kann auch einen integralen Bestandteil der Ventilanordnung bilden. Auch die Sensoranordnung kann am Gehäuse der Ventilanordnung angeordnet sein.

Bevorzugt ist aber eine Variante, bei der die Sensoranordnung, insbesondere in Kombination mit dem mindestens einen ortsfesten Magneten und/oder mit zumindest Teilen der Leiteranordnung von der Ventilanordnung entfernbar ist.

Die Positionserfassungsvorrichtung ist vorteilhafterweise ganz oder teilweise in axialer Verlängerung des Ventilglieds anordenbar.

Die Art der Positionserfassung der Positionserfassungsvorrichtung kann vielfältige Varianten umfassen.

Beispielsweise kann die Sensoranordnung zur Erfassung einer Endposition des Ventilglieds ausgestaltet sein. Es ist aber auch möglich, dass die Positionserfassungsvorrichtung zur Erfassung der Geschwindigkeit des Ventilgliedes, eines Abstandes des Ventilglieds von einer vorbestimmten Position oder zur Erfassung von Schaltzyklen der fluidtechnischen Ventilanordnung ausgestaltet ist. Varianten und Kombinationen der vorgenannten Maßnahmen sind ohne weiteres möglich.

Das Ventilglied weist vorzugsweise mindestens einen magnetisch leitenden Abschnitt zu Bildung des magnetischen Kreises auf. Beispielsweise handelt es sich dabei um einen Abschnitt aus Weicheisen oder dergleichen. Es ist prinzipiell aber auch erlaubt, dass das Material des Ventilglieds durch den ortsfesten Erreger-Magneten magnetisiert wird. Ferner ist es denkbar, dass das Ventilglied auch einen magnetischen Abschnitt aufweist, beispielsweise aus magnetischem Pulver, das in einer elastischen Trägermasse, beispielsweise synthetisches Gummi und/oder Kunstharz, verteilt ist.

Zur Übermittlung des Positionssignals können separate Positionssignal-Leitungen vorgesehen sein. Vorzugsweise weist die Positionserfassungsvorrichtung jedoch eine Netzwerk-Schnittstelle, beispielsweise eine Bus-Schnittstelle und/oder eine Internet-Schnittstelle, zur Übermittlung der Positionssignale auf.

Die nachfolgenden, besonders bevorzugten Maßnahmen beziehen sich auf ein modulares Konzept.

Die Positionserfassungsvorrichtung ist zweckmäßigerweise ein Positionserfassungsmodul. Die fluidtechnische Ventilanordnung ist beispielsweise ein Ventilmodul. Das Positionserfassungsmodul und das Ventilmodul sind zweckmäßigerweise in einer Reihenrichtung zu einer fluidtechnischen Ventilbatterie aneinander anreihbar, die beispielsweise auch weitere Ventilmodule und/oder Positionserfassungsmodule aufweisen kann. Beispielsweise ist ein Positionserfassungsmodul zwischen zwei Ventilmodulen angeordnet und erfasst eine oder mehrere Positionen von Ventilgliedern der Ventilmodule.

Das Ventilmodul bzw. das Positionserfassungsmodul können zu einer selbsttragenden Konstruktion zusammengefasst werden. Zweckmäßigerweise sind jedoch Montageplätze für die Module vorhanden, beispielsweise an einem Trägerelement, an dem das Positionserfassungsmodul bzw. das Ventilmodul anordenbar sind. Das Positionserfassungsmodul weist vorzugsweise Modul-Kontaktmittel zur Herstellung einer elektrischen Verbindung mit Ventilbatterie-Kontaktmitteln auf, die an dem Montageplatz vorhanden sind. Über die Kontaktmittel sind beispielsweise Bus-Kommunikationsverbindungen herstellbar. Besonders bevorzugt ist eine Variante, bei der wahlweise an einem Montageplatz entweder ein Positionserfassungsmodul oder auch ein Ventilmodul anordenbar sind. Die Modul-Kontaktmittel des Positionserfassungsmoduls sind zweckmäßigerweise zu einer Identifizierung des Positionserfassungsmoduls an einer über die Ventilbatterie-Kontaktmittel herstellbaren Kommunikätionsverbindung ausgestaltet. Beispielsweise enthalten die Modul-Kontaktmittel einen Codier-Steckkontakt. Sie können auch beim Anlegen eines elektrischen Prüfstroms und/oder Prüfspannung eine vorbestimmte elektrische Antwort geben. Möglich ist auch, dass die Positionserfassungsvorrichtung eine Identifizierungsinformation zur Identifizierung mindestens einer Diagnosefunktion, beispielsweise der Positionserfassungsfunktion, über die Modul-Kontaktmittel versendet.

Nachfolgend werden Ausführungsbeispiele der Erfindung anhand der Zeichnung näher erläutert. Es zeigen:
- Figur 1: eine perspektivische Ansicht einer Ventilbatterie mit zwei fluidtechnischen Ventilmodulen sowie zwei erfindungsgemäßen Positionserfassungsvorrichtungen in Gestalt von Positionserfassungsmodulen,

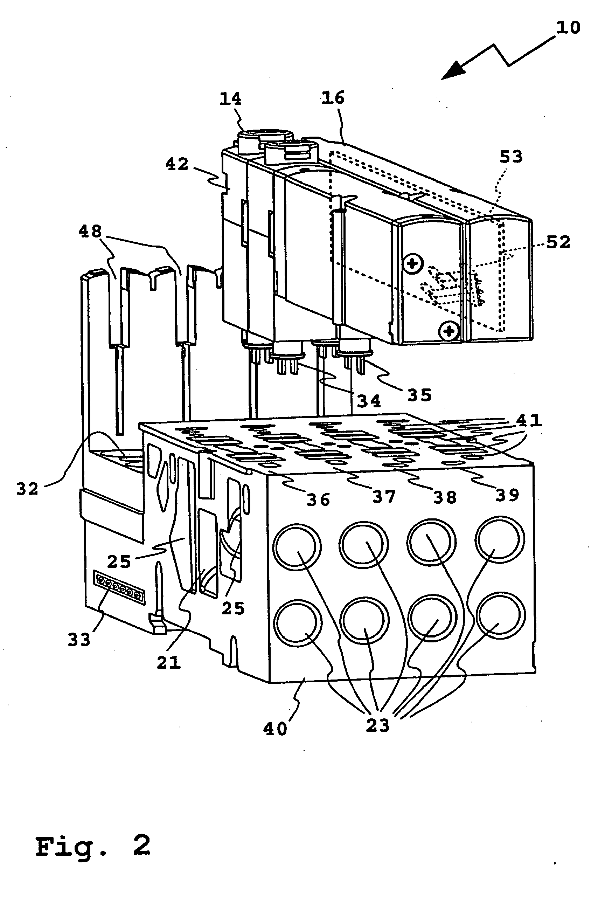

- Figur 2: eine Teil-Ansicht der Ventilbatterie gemäß Figur 1 mit einem Trägerelement, einem Ventilmodul und einem Positionserfassungsmodul,
- Figur 3: eine Teilansicht des Positionserfassungsmoduls gemäß Figur 2 sowie ein Ventilglied des Ventilmoduls gemäß Figur 2,
- Figur 4: eine detailliertere Teilansicht der in Figur 3 gezeigten Komponenten,
- Figur 5: eine Ansicht von oben eines Positionserfassungsmoduls und eines Ventilmoduls gemäß Figur 1,

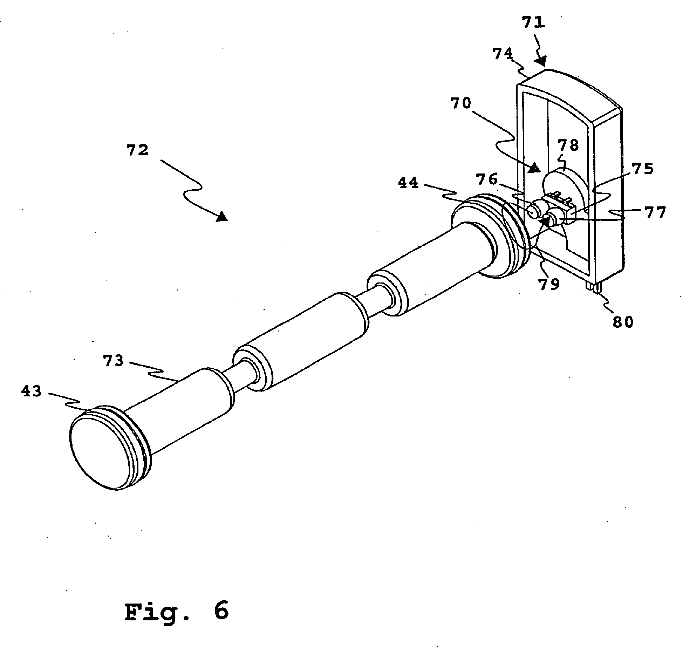

- Figur 6: eine Teilansicht eines von dem ersten Ausführungsbeispiel gemäß Figuren 1 bis 5 abweichenden zweiten Ausführungsbeispiels, bei dem von einer Ventilanordnung lediglich ein Ventilglied gezeigt ist, dessen Position durch eine im Gehäuse der Ventilanordnung angeordnete Positionserfassungsvorrichtung erfasst wird,
- Figur 7: eine perspektivische Ansicht eines dritten Ausführungsbeispiels einer Positionserfassungsvorrichtung, die zwei benachbarten Ventilmodulen zugeordnet ist,
- Figur 8: eine Ansicht von oben der Positionserfassungsvorrichtung gemäß Figur 7, und
- Figur 9: eine perspektivische Ansicht eines Ventilmoduls und eines diesem zugeordneten vierten Ausführungsbeispiels einer Positionserfassungsvorrichtung, die jedoch nur teilweise dargestellt sind.

Bei einer fluidtechnischen Ventilbatterie 10, vorliegend einer pneumatischen Ventilbatterie, sind auf einem Trägerelement 12 Ventilmodule 13, 15 sowie Positionserfassungsmodule 14, 16 und Abluftmodule 17, 18 angeordnet. Die Ventilmodule 13, 15 werden von einem Steuergerät 11 der Ventilbatterie 10 gesteuert und überwacht. Die jeweilige Position von Ventilgliedern 22 der Ventilmodule 13, 15 wird von den Positionserfassungsmodulen 14, 16 erfasst. Die Module 13 bis 18 sind in einer Reihenrichtung 31 an das Steuergerät 11 angereiht. Die Ventilbatterie 10 dient beispielsweise zur Ansteuerung einer Maschine, einer Anlage oder einzelner Arbeitsgeräte. Die anzusteuernden Einrichtungen werden durch Fluidkraft, vorliegend durch Druckluft, betrieben. In Abhängigkeit von der Stellung der Ventilglieder 22 der Ventilmodule 13, 15 werden die anzusteuernden Einrichtungen, beispielsweise pneumatische Arbeitszylinder, Linearantriebe oder dergleichen, mit Druckluft beaufschlagt oder entlastet und somit betätigt. Die Ventilmodule 13, 15 sind fluidtechnische Ventilanordnungen, z.B. Mehrfachventile, beispielsweise 2/3-Ventile.

Ein zentrales Element des Trägerelementes 12 bildet ein Verteilerblock 40 zur Versorgung der Ventilmodule 14 mit Druckluft und zu deren Druckentlastung. Über Speiseanschlüsse 20 ist Druckluft einspeisbar, die über einen Speisekanal 21 zu den vorliegend oben auf dem Verteilerblock 40 sitzenden Ventilmodulen 12, 14 gelangt. In Abhängigkeit von deren Ventilgliedern 22 strömt die Druckluft über Arbeitskanäle 23 zu vorn am Verteilerblock 40 angeordneten Arbeitsanschlüssen 24, um nicht dargestellte angeschlossene Einrichtungen zu betätigen. Von diesen Einrichtungen zurückströmende Druckluft gelangt über Entlastungskanäle 25 zu den Abluftmodulen 17, 18, die z.B. Schalldämpfer enthalten. An den Abluftmodulen 17, 18 kann das Druckmedium über Auslässe 26 entweichen.

Die Ventilmodule 13, 15 können direkt gesteuerte Antriebe sein, wobei elektrodynamische und/oder elektrostatische Antriebe zum Antreiben der Ventilglieder 22 vorgesehen sein können. Vorliegend handelt es sich bei den Ventilmodulen 13, 15 um sogenannte vorgesteuerte Ventile, bei denen Ventilantriebe 42 das Einströmen und/oder Ausströmen von Druckmedium, vorliegend Druckluft, zum Antreiben der Ventilglieder 22 steuern. Dieses Vorsteuer-Druckmedium betätigt Kolben 43, 44, die an den axialen Enden der Ventilglieder 22 angeordnet sind. Bei der bekannten Positionserfassungstechnik müssten diese Kolben 43, 44 magnetisch sein oder mit Permanentmagneten versehen sein, damit magnetische Sensoren die Position der Kolben 43, 44 erfassen können. Dies ist jedoch mit der erfindungsgemäßen Positionserfassungstechnik nicht notwendig. Die Ventilmodule 13, 15 sind zwar zur Kooperation mit den Positionserfassungsmodulen 14, 16 ausgestaltet. Sie sind jedoch auch ohne die Positionserfassungsmodule 14, 16 betreibbar, wenn die Erfassung der Position der Ventilglieder 22 nicht erforderlich ist. Der bauliche Aufwand zur Positionserfassung der Ventilglieder 22 ist bei den Ventilmodulen 13, 15 minimal, insbesondere können standardisierte Ventilglieder 22 verwendet werden, die lediglich abschnittsweise eine magnetische Leitfähigkeit aufweisen müssen. Dies ist jedoch bei einer Vielzahl von Eisenmetallen, die für Ventilglieder üblicherweise verwendet werden, ohnehin der Fall.

Die Positionserfassungsmodule 14, 16 sind den Ventilmodulen 13, 15 zugeordnet und erfassen die Position von deren Ventilgliedern 22. Prinzipiell wäre es auch möglich, dass ein Positionserfassungsmodul zur Positionserfassung in Zusammenwirken mit zwei benachbarten Ventilmodulen ausgestaltet ist. Die Ventilmodule 13, 15 und die Positionserfassungsmodule 14, 16 haben Gehäuse 45, 46 mit nahezu identischen Außenkonturen, wobei beispielsweise Vorsprünge zur Aufnahme von Befestigungsschrauben, mit denen die Module 13 bis 16 am Trägerelement 12 festgeschraubt sind, im montierten Zustand der Module 13 bis 16 in kooperierende Aussparungen eines benachbarten Gehäuses 45, 46 eingreifen. Jedenfalls sind die Module 13 bis 16 nahe aneinander anordenbar, was sich für die nachfolgend beschriebene Positionserfassung durch die Positionserfassungsmodule 14, 16 als vorteilhaft erweist.

Die Positionserfassungsmodule 14, 16 sind vorliegend weitgehend gleichartig aufgebaut und weisen magnetische Sensoranordnungen 50 mit magnetoresistiven Sensoren 51, 52 auf. Die Sensoren 51, 52 sind beispielsweise als integrierte Schaltkreise ausgeführt, die an einer Platine 53 angeordnet sind. Die Platine 53 kann weitere, in der Figur nicht dargestellte elektrische Komponenten enthalten, beispielsweise Signalaufbereitungskomponenten zur Aufbereitung von durch die Sensoren 51, 52 erzeugten Positionssignalen, Kommunikationskomponenten, beispielsweise Busschnittstellen-Bausteine zur Kommunikation über einen internen Bus 29 der Ventilbatterie 10 oder dergleichen.

Mit den Sensoren 51, 52 sind die axialen Endpositionen des Ventilglieds 22 erfassbar. Darüber hinaus ist das von den Positionserfassungsmodulen 14, 16 bereitgestellte Positionssignal wegabhängig veränderlich, wenn sich der Kolben 43, 44 im jeweiligen Erfassungsbereich der Sensoren 51, 52 befinden. Beispielsweise nimmt die Amplitude des Positionssignales zu, wenn sich die Kolben 43, 44 den Sensoren 51, 52 annähern. Die Sensoren 51, 52 können somit nicht nur die jeweilige Endposition des Ventilglieds 22, sondern auch den Abstand des Ventilglieds 22 von den Endpositionen erfassen. Durch eine Erfassung des Geschwindigkeitsverhaltens des Ventilglieds 22, die die Positionserfassungsmodule 14, 16 prinzipiell auch leisten können, kann beispielsweise eine Alterung des jeweiligen Ventilmoduls 13, 15, ein Verschleiß oder dergleichen diagnostiziert werden. Ferner können die Positionserfassungsmodule 14, 16 Zählmittel und/oder Speichermittel zur Erfassung von Schaltzyklen der Ventilmodule 13, 15 enthalten.

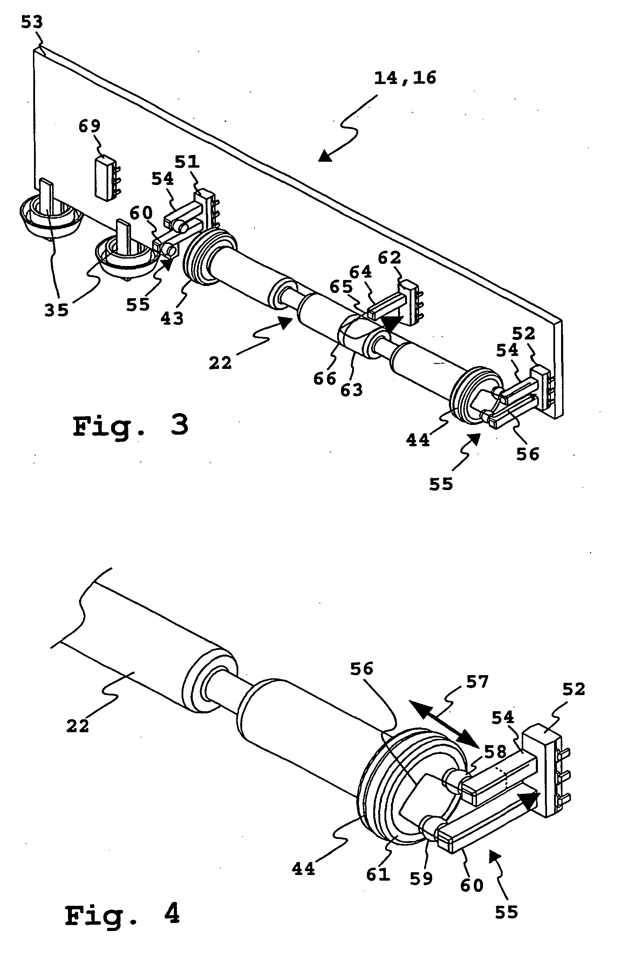

Bei den Sensoren 51, 52 sind ortsfeste Magnete 54 sowie magnetische Leiteranordnungen 55 angeordnet. Die magnetische Leiteranordnung 55 enthält beispielsweise Weicheisenteile. Wenn sich das Ventilglied 22 im Bereich seiner jeweiligen Endpositionen befindet, beispielsweise in der in Figur 3 gezeigten Stellung, werden magnetische Kreise 56, die von den Magneten 54 ausgehen, über die magnetischen Leiteranordnungen 55 sowie die Kolben 43, 44 geschlossen, so dass die Sensoren 51, 52 die Anwesenheit der Kolben 43, 44 in ihren jeweiligen Erfassungsbereichen, also den Endanschlags-Bereichen erfassen können und ein entsprechendes Positionssignal ausgeben können. Die Magneten 54 sowie Leiteranordnungen 55 sind vorliegend in die Ventilmodule 13, 15 integriert. Erfindungsgemäß bilden sie einen Bestandteil entsprechend ausgestalteter Positionserfassungsmodule.

Anhand von Figur 4 wird im folgenden der Verlauf eines magnetischen Kreises 56 beim Sensor 52 näher erläutert. Wenn sich der Kolben 44 innerhalb eines durch einen Pfeil 57 angedeuteten Erfassungsbereichs 57 des Sensors 52 befindet, wird der magnetische Kreis 56 geschlossen. Der magnetische Kreis 56 verläuft vom Magneten 54 über ein Flussleitstück 58, den Kolben 44 sowie weitere magnetische Flussleitstücke 59 und 60 zum Sensor 52.

Die magnetischen Flussleitstücke 58, 59 sind zur Stirnseite 61 des Kolbens 44 und somit entlang der Bewegungsachse des Ventilglieds 22 orientiert. Die Flussleitstücke 58, 59 können einen Endanschlag für den Kolben 44 bilden oder in einen Endanschlagsbereich für den Kolben 44 integriert sein. Der Magnet 54 sowie das Flussleitstück 60, die mit den Flussleitstücken 58, 59 in Verbindung stehen, sind zum Sensor 60, mithin also zur Seitenwand des Gehäuses 45 hin orientiert. Die magnetische Leiteranordnung 55 lenkt somit den magnetischen Fluss des Magneten 54 zum einen in die axiale Richtung des Ventilgliedes 22 und zum andern quer zu dieser axialen Richtung hin zum Sensor 52. Der Magnet 54 sowie das Flussleitstück 60 erzeugen bzw. lenken den magnetischen Fluss zur Außenseite des Gehäuses 45.

In den Figuren 3 und 4 sind der Sensor 52 und der Permanentmagnet 44 bzw. das Flussleitstück 60 des Positionserfassungsmoduls 16 unmittelbar aneinanderstoßend dargestellt. In der Praxis können wie z.B. wie beim Positionserfassungsmodul 15, das eine Abwandlung des Positionserfassungsmoduls 16 ist, Wandungen der Gehäuse 45, 46 dazwischen angeordnet sein, wobei der magnetische Kreis 56 über diese Wandungen geschlossen wird. Zusätzlich sind beim Positionserfassungsmodul 15 je zwei Flussleitstücke 58 zwischen der Wandung seines Gehäuses und den Sensoren 51, 52, angeordnet. Je ein Flussleitstück 58 ist dem Magneten 54 und dem Flussleitstück 60 zugeordnet und lenkt den durch diese erzeugten bzw. geleiteten magnetischen Fluss zu den Sensoren 51, 52.

Erfindungsgemäß sind Permanentmagneten 54 und/oder das Flussleitstück 60 als ein Bestandteil eines Positionserfassungsmoduls ausgestaltet. Beispielsweise könnte der Sensor 52 weiter im Innern des Positionserfassungsmoduls 14 angeordnet sein, so dass beispielsweise der Magnet 54 zwischen der Wandung des Gehäuses 46 und dem Sensor 54 anordenbar ist.

An die Stelle der Flussleitstücke 58 bis 60 könnte z.B. auch jeweils ein Magnet treten.

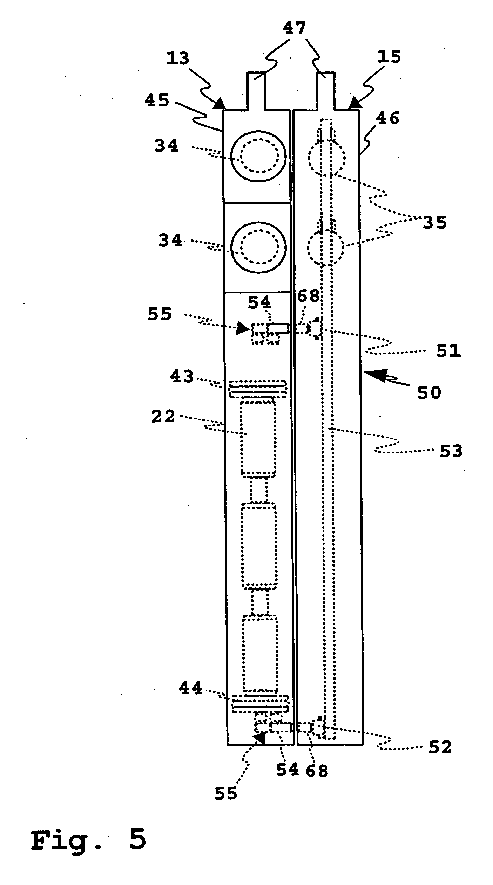

Es versteht sich, dass nicht nur Positionen von Endabschnitten, beispielsweise der Kolben 43, 44, des Ventilglieds 22 durch ein erfindungsgemäßes Positionserfassungsmodul erfassbar sind. Beispielsweise kann mit einem Sensor 62, der einen mittleren Abschnitt 63 des Ventilgliedes 22 zugeordnet ist, die Position dieses mittleren Abschnittes 63 erfasst werden. Dabei wird von einem Magnet 64, der dem Sensor 62 zugeordnet ist, ein magnetischer Fluss erzeugt, so dass sich ein magnetischer Kreis 65 vom Magneten 64 über den mittleren Abschnitt 63 zum Sensor 62 einstellt. Zur Bildung des magnetischen Kreises 65 weist der mittlere Abschnitt 63 des Ventilglieds 62 beispielsweise an seinem Außenumfang einen Ring 66 aus magnetisch leitfähigem Material, beispielsweise aus einem Eisenmetall, auf. Bei dem Sensor 62 könnten zusätzlich magnetische Leiteranordnungen in der Art der Leiteranordnung 55 vorgesehen sein. Der Sensor 62 ist eine optionale Komponente, die bei einer bevorzugten Ausführungsform der Positionserfassungsmodule 14, 16 nicht vorhanden ist. Aus Gründen der besseren Erkennbarkeit jedoch ist die Anordnung um den Sensor 62 dennoch in durchgezogenen Linien gezeichnet, bei den Figuren 4 und 5 jedoch weggelassen.

Die Sensoranordnung 50 erzeugt Positionssignale in Abhängigkeit von der Stellung des Ventilglieds 22. Diese Positionssignale werden beispielsweise in Form von Bustelegrammen auf dem internen Bus 29 an ein lokales Steuermodul 19 und/oder eine übergeordnete Steuerung 27 und/oder an die Ventilmodule 13, 15 übermittelt. Ferner kann auch eine lokale Anzeige der Positionssignale vorgesehen sein. Dies ist beispielsweise beim Positionserfassungsmodul 16 der Fall, das oberseitig Anzeigemittel 67 aufweist. Die Anzeigemittel 67 enthalten beispielsweise Leuchtdioden, mit denen beispielsweise die Stellung des Ventilglied 22 in den Endpositionen und einer Zwischenstellung anzeigbar ist. Die Anzeigemittel 67 können beispielsweise auch ein LCD (Liquid Crystal Display) enthalten.

Das lokale Steuermodul 19 bildet ein lokale Steuerung der Ventilbatterie 10. Über eine Schnittstelle 28 kann ein übergeordnete Steuerung 27 angeschlossen werden, die dem lokalen Steuermodul 19 und/oder den Ventilmodulen 13, 15 und/oder den Positionserfassungsmodulen 14, 16 Steuerbefehle senden kann. In der umgekehrten Richtung, der Überwachungsrichtung, sendet das Steuermodul 19 und/oder senden die Positionserfassungsmodule 14, 16 Meldungen, beispielsweise Positionsmeldungen, an die Steuerung 27 und/oder das Steuermodul 19.

Der interne Bus 29 dient zur internen Kommunikation der Ventilbatterie. Auf dem Bus 29 können Buskommunikationsverbindungen 30 zwischen dem Steuermodul 19, den Ventilmodulen 13, 15 und den Positionserfassungsmodulen 14, 16 aufgebaut werden, die zur Buskommunikation z.B. Schnittstellenbausteine 69 aufweisen. Der interne Bus 29 ist beispielsweise ein Profibus, ein CAN-Bus (CAN = Controller Area Network) oder ein sonstiger Feldbus. Bei dem internen Bus 29 kann es sich aber auch um einen proprietären Bus handeln, der auf die Kommunikationsbelange der Ventilbatterie 10 optimal ausgerichtet ist.

Die Ventilmodule 13, 15 sowie die Positionserfassungsmodule 14, 16 sind von oben auf das Trägerelement 12 aufsteckbar. Die Positionierung der Module 13 bis 16 wird durch Führungsvorsprünge 47 erleichtert, die sich vorn an den Modulen 13 bis 16 befinden. Die Vorsprünge 45 treten beim Aufstecken der Module 13 bis 16 in Führungsaufnahmen 48 am Trägerelement 12 ein und werden durch die Führungsaufnahmen 48 geführt. Im montierten Zustand der Module 13 bis 16 sind Modulkontakte 34, 35 der Ventilmodule 13, 15 bzw. Positionserfassungsmodule 14, 16 mit Ventilbatteriekontakten 32 des Trägerelements 12 verbunden. Die Ventilbatteriekontakte 32 dienen zur Kontaktierung von Busleitungen 33, die zur Herstellung des internen Busses 29 dienen. Die Modul-Kontakte 34, 35 sind beispielsweise Kontakt-Stecker, die mit den als Steckaufnahmen ausgestalteten Ventilbatterie-Kontakten 32 kooperieren. Die Modul-Kontakte 35 sind beispielsweise mit der Platine 53 durch eine Lötverbindung verbunden. Die Modul-Kontakte 35 stehen nach unten vor die Positionserfassungsmodule 14, 16 vor.

An Montageplätzen 36 bis 39 des Trägerelements 12, an denen vorliegend die Module 13 bis 16 montiert sind, sind oberseitig Ein-/Auslassöffnungen 41 vorgesehen, über die Ventilmodule, beispielsweise die Ventilmodule 13, 15, mit dem Kahalsystem des Verteilerblocks 40 verbindbar sind. Beispielsweise sind die Ventilmodule 13, 15 über die Ein-/Auslassöffnungen 41 mit dem Speisekanal 21, den Entlastungskanälen 25 sowie den Arbeitskanälen 23 verbunden. Zwischen den Ventilmodulen 13, 15 und dem Verteilerblock 40 kann eine nicht dargestellte Dichtung angeordnet sein. Die Positionserfassungsmodule 14, 16 hingegen haben unterseitig vorliegend keine Öffnungen, um mit den Ein-/Auslassöffnungen in Verbindung zu treten. Stattdessen können die Positionserfassungsmodule 14, 16 unterseitig Dichtungsanordnungen zum Verschließen der Ein-/Auslassöffnungen 41 aufweisen.

Prinzipiell ist es auch möglich, dass die Positionserfassungsmodule 14, 16 weitere Diagnosefunktionen erbringen, beispielsweise eine Druckerfassung im Kanalsystem des Verteilerblocks 40. Dazu könnten beispielsweise Druck-Sensoren der Module 14, 16 in die Kanäle 21, 23, 25 hineinragen und/oder mit den Ein-/Auslassöffnungen 41 kooperierende Diagnoseöffnungen an den Modulen 14, 16 unterseitig vorgesehen sein.

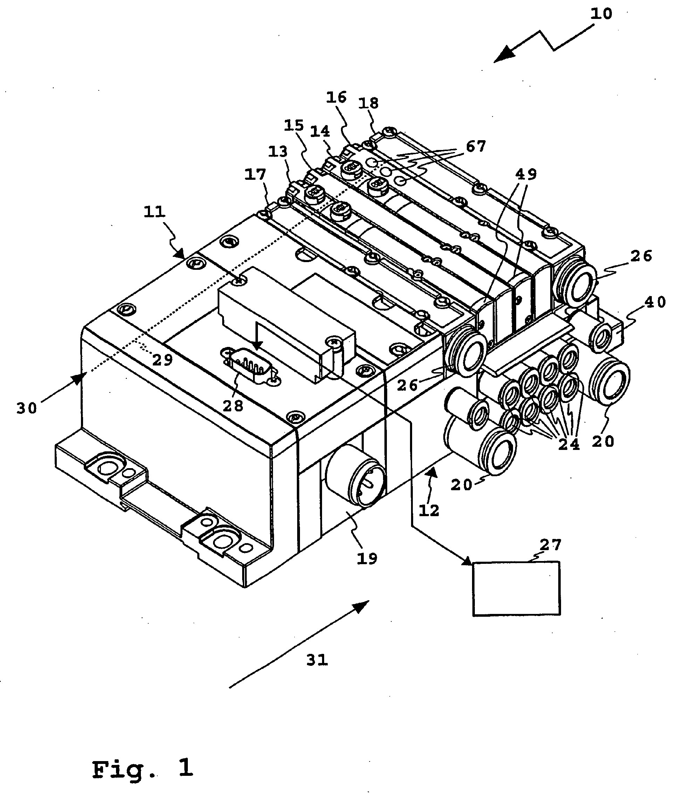

Im Gegensatz zum ersten Ausführungsbeispiel ist bei dem zweiten Ausführungsbeispiel eine Positionserfassungsvorrichtung 70 in ein Gehäuse 71 einer Ventilanordnung 72 integriert. Die Ventilanordnung 72 kann beispielsweise als Ventilmodul ausgestaltet sein, das zu einer ventilbatterie integrierbar ist. Die Ventilanordnung 72 enthält ein Ventilglied 73 eines Ventils, z.B. eines 2/3-Ventils. Das Ventilglied entspricht im wesentlichen dem Ventilglied 22 und weist mit Druckluft betätigbare Kolben 43, 44 auf. Die Positionserfassungsvorrichtung 70 ist in einen Gehäusedeckel 74 des Gehäuses 71 integriert. Der Gehäusedeckel 74 verschließt stirnseitig das Gehäuse 71 z.B. in der Art von Gehäusedeckeln 49 der Ventilmodule 13, 15 (siehe Figur 1).

Die Positionserfassungsvorrichtung 70 ist dem Kolben 44 zugeordnet und erfasst beispielsweise dessen Endlage. Sie kann jedoch auch zur kontinuierlichen Positionserfassung vorgesehen sein, wobei sie beispielsweise auch die in Figur 5 gezeigt Position des Ventilglieds 73 erfassen kann, bei der der Kolben 44 von der Positionserfassungsvorrichtung 70 entfernt ist. Beim Kolben 44 kann optional ebenfalls eine Positionserfassungsvorrichtung in der Art der Positionserfassungsvorrichtung 70 vorgesehen sein.

Die Positionserfassungsvorrichtung 70 enthält einen Sensor 75, beispielsweise einen magnetoresistiven Sensor oder einen Hall-Sensor, vorliegend in Gestalt eines integrierten Schaltkreises. Der Sensor 75 ist an einem Trägerelement 78, das beispielsweise als elektrische Platine ausgeführt ist, angeordnet. Der Sensor 75 ist in axialer Richtung des Ventilglieds 73 angeordnet. Ein am Sensor 75 angeordneter Magnet 76 erzeugt ein Magnetfeld, so dass ein magnetischer Kreis 79 vom Magnet 76 über den magnetisch leitenden Kolben 44 und ein am Sensor 75 angeordnetes magnetisch leitfähiges Flussleitstück zum Sensor 75 geschlossen ist. Der Sensor 75 kann die Position des Kolbens 44 z.B. anhand der Feldstärke im magnetischen Kreis 79 ermitteln. Anstelle des Flussleitstückes 77 könnte ein zweiter Magnet vorgesehen sein. Es ist auch möglich, dass der Kolben 44 zumindest teilweise magnetisiert ist, so dass er den magnetischen Kreis 79 schließen kann. Der Magnet 76 und das Flussleitstück 70 sind in axialer Richtung des Ventilglieds 73 orientiert und sind beispielsweise auf das Gehäuse des Sensors 75 aufgeklebt. Über elektrische Kontakte 78 an der Unterseite des Gehäusedeckels 74 können vom Sensor 75 erzeugte, die Position des Ventilgliedes 73 repräsentierende Positionssignale abgegriffen werden. Die Kontakte 80 werden beispielsweise in korrespondierende Kontakte eines Trägerelements in der Art des Trägerelementes 12 eingesteckt.

Bei einer nicht dargestellten Variante der Erfindung ist eine erfindungsgemäße Positionserfassungsvorrichtung an einem Trägerelement in der Art des Trägerelementes 12 oberseitig angeordnet und dient zur Positionserfassung von Ventilgliedern, die in auf den Trägerelementen anordenbaren Ventilanordnungen enthalten sind. Die Ventilanordnungen könnten beispielsweise ähnlich wie die Ventilmodule 13, 15 ausgestaltet sein, wobei die magnetischen Leiteranordnungen zum Führen eines magnetischen Flusses zur Unterseite der jeweiligen Ventilmodule ausgestaltet sind. Es kann auch eine Variante vorgesehen sein, bei der die Sensoranordnung, der oder die Magnete und/oder eine magnetische Leiteranordnung an der Oberseite eines Trägerelementes angeordnet sind, um die Position von ventilgliedern zu erfassen, die in auf dem Trägerelement angeordneten Ventilanordnungen enthalten sind. Der Magnet und/oder die magnetischen Leiteranordnungen können in entsprechende Ausnehmungen an Gehäusen der Ventilanordnungen eingreifen.

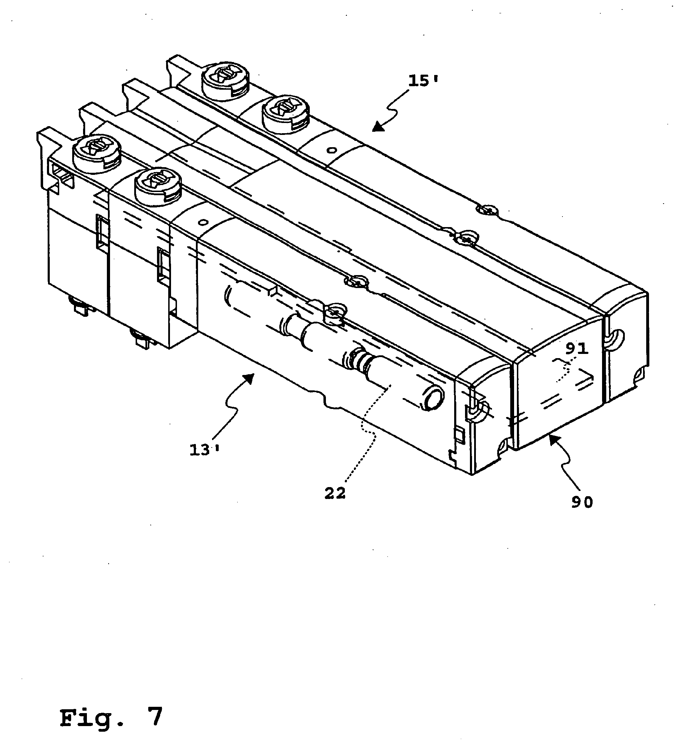

Ein Positionserfassungsmodul 90 gemäß Figur 7 ist ein drittes Ausführungsbeispiel einer erfindungsgemäßen Positionserfassungsvorrichtung. Das Positionserfassungsmodul 90 ist beispielsweise zwischen Ventilmodulen 13', 15' angeordnet, die im wesentlichen den Ventilmodulen 13 und 15 entsprechen. Gegenüber den Positionserfassungsmodulen 14 und 16 weist das Positionserfassungsmodul 90 eine doppelte Breite auf, das heißt es ist zwei Montageplätzen, beispielsweise den Montageplätzen 37 und 38 zugeordnet. Die Ventilmodule 13', 15' sind zu beiden Seiten des Positionserfassungsmoduls angeordnet, beispielsweise an den Montageplätzen 36 und 39.

Die Grundfunktionen des Positionserfassungsmoduls 90 entsprechen denen vorher erläuterter Positionserfassungsmodule, beispielsweise der Positionserfassungsmodule 14, 16. Das Positionserfassungsmodul 90 erfasst die jeweiligen Endpositionen der Ventilglieder 22 der Ventilmodule 13', 15'. Ein wesentlicher Unterschied ist allerdings, dass in den ventilmodulen 13', 15' weder ein ortsfester Magnet noch eine Leitanordnung vorhanden sein muss. Diese Komponenten sind, soweit erforderlich, in dem Positionserfassungsmodul 90 enthalten.

Auf eine Platine 91 sind Sensoren 92, beispielsweise magnetoresitistive Sensoren, Hall-Sensoren oder dergleichen angeordnet, die den jeweiligen Endpositionen der Ventilglieder 22 zugeordnet sind. Das für die Sensoren 92 erforderliche magnetische Feld wird von ortsfesten Permanentmagneten 93 erzeugt, die ebenso wie die Platine 91 in einem Gehäuse 94 des Positionserfassungsmodul 90 angeordnet sind. Jeweils ein ortsfester Magnet 93 ist einem Sensor 92 zugeordnet, so dass insgesamt vier Sensor-Magnet-Anordnungen vorhanden sind, die den jeweiligen Endpositionen der Ventilglieder 22 zugeordnet sind.

Das Positionserfassungsmodul 90 kann ohne Zuhilfenahme von magnetischen Flussleitstücken die jeweilige Position der Ventilglieder 22 erfassen, so dass weder im Positionserfassungsmodul 90 noch in den benachbarten Ventilmodulen 13', 15' entsprechend Flussleitelemente vorhanden sein müssen.

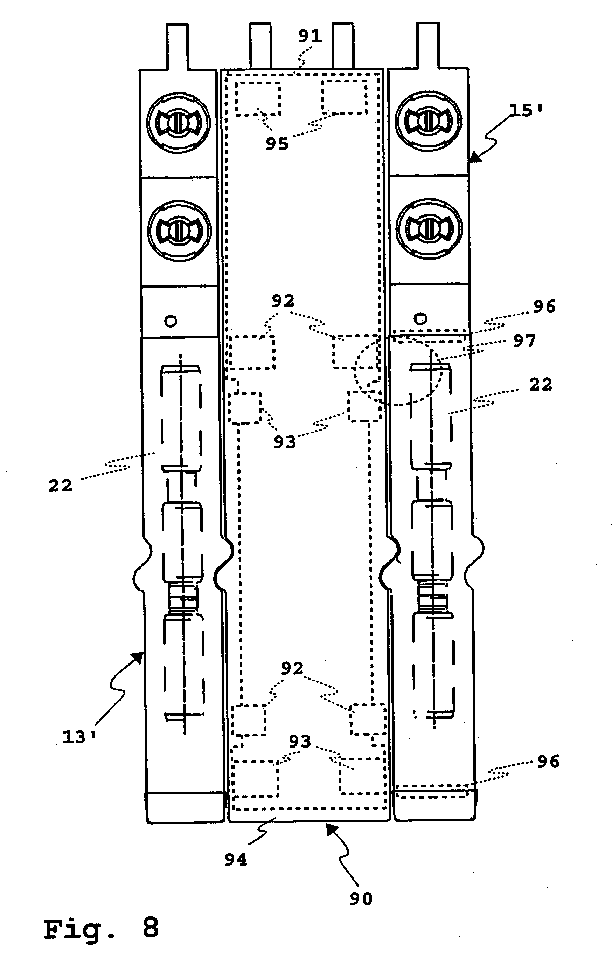

Allerdings ist es in einer optionalen Variante möglich, dass beispielsweise in einem Ventilmodul, z.B. dem Ventilmodul 15' Flussleitelemente 96 vorhanden sind, beispielsweise stirnseitig in einem Anschlagbereich des Ventilglieds 22. In Figur 8 ist beispielhaft rechts oben dargestellt, wie sich ein magnetischer Fluss 97 vom ortsfesten Magnet 93 ausgehend über das Ventilglied 22 und das Flussleitelement 96 zum Sensor 92 ausbildet, so dass der Sensor 92 die Position des Ventilglieds 22, vorliegend die obere Position erfassen kann.

Kommunikationsmodule 95, beispielsweise entsprechende integrierte Schaltkreise, dienen zur Kommunikation am internen Bus 29. Das Positionserfassungsmodul 90 meldet sich automatisch am internen Bus 29 an und übermittelt auf dem Bus 29 die von den Sensoren 92 jeweils erfassten Messwerte betreffend die Position der Ventilglieder 22 der benachbarten Ventilmodule 13', 15'. Es ist auch möglich, dass das Positionserfassungsmodul 90 am Bus 29 eine Nachricht versendet, dass kein Ventilmodul am jeweiligen benachbarten Montageplatz vorhanden ist, wenn dort kein entsprechendes Ventilglied erfassbar ist.

Es versteht sich, dass das Positionserfassungsmodul 90 beispielsweise auch zu Geschwindigkeitsmessungen, zur relativen Positionserfassung oder dergleichen ausgestaltet sein kann.

Es ist zwar besonders vorteilhaft, dass die Ventilmodule, die in Kombination mit dem Positionserfassungsmodul 90 verwendet werden, keinerlei zusätzliche Komponenten zur Positionserfassung ihrer Ventilglieder 22 benötigen, wenn diese magnetisch leitfähig sind, um mit den Sensoren 92 bzw. den im Positionserfassungsmodul 90 lokal vorhandenen ortsfesten Magneten 93 zu funktionieren. Es können bei den Ventilmodulen 13', 15' aber auch zusätzlich ortfeste Magneten vorhanden sein, beispielsweise jeweils ein Magnet anstelle des entsprechenden Flussleitelements 96, so dass dieser Magnet im Zusammenwirken mit dem jeweiligen Magneten 93 des Positionserfassungsmoduls 90 den magnetischen Fluss für den jeweils zugeordneten Sensor 92 bereitstellt. Ferner können im Gehäuse 94 des Positionserfassungsmoduls 90 zwischen den Magneten 93 magnetische Abschirmeinrichtungen, z.B. Abschirmbleche, vorhanden sein, damit sich die Magnete 93 nicht wechselseitig beeinflussen. Z.B. kann eine Abschirmeinrichtung zwischen den dem Ventilmodul 13' zugeordneten Sensor-Magnet-Anordnungen und den dem Ventilmodul 15' zugeordneten Sensor-Magnet-Anordnungen vorhanden sein.

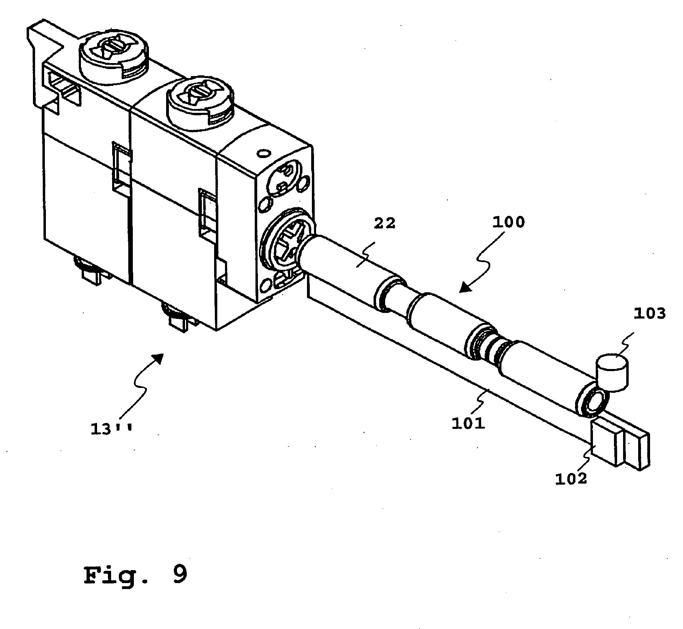

Ein Positionserfassungsmodul 100 stellt eine Positionserfassungsvorrichtung dar und ist in Figur 9 teilweise dargestellt. Ferner ist ein Ventilmodul 13'' dargestellt, das im wesentlichen dem Ventilmodul 13 entspricht und ebenfalls ein Ventilglied 22 aufweist. Beim Ventilmodul 13'' sind aus Veranschaulichungsgründen Ventil-Gehäusebestandteile nicht dargestellt, die das Ventilglied 22 umgeben. Das Positionserfassungsmodul 100 ist ebenfalls im wesentlichen nicht dargestellt, beispielsweise ist sein Gehäuse, das von dem Gehäuse des Ventilmoduls 13'' separat ist, nicht gezeigt. Gezeigt ist allerdings eine Platine 101 des Positionserfassungsmoduls 100, auf der ein Sensor 102, beispielsweise ein magnetoresistiver Sensor, angeordnet ist. Der Sensor 102 erfasst die Position des Ventilglieds 22. Das dafür erforderliche magnetische Erregerfeld stellt ein ortsfester Magnet 103 bereit, der einen Bestandteil des Ventilmoduls 13'' bildet und beispielsweise einem Ende des Ventilglieds 22 zugeordnet ist. Magnetische Leitelemente sind weder im Ventilmodul 13'' noch im Positionserfassungsmodul 100 erforderlich.

## Patentansprüche

1. Positionserfassungsvorrichtung für eine fluidtechnische Ventilanordnung (13, 15; 72), mit einer ortsfesten magnetischen Sensoranordnung (50; 75) zum Erfassen der Position eines beweglichen Ventilglieds (22; 73) der Ventilanordnung (13, 15; 72), wobei ein ortsfester Magnet (54; 64; 76) derart bei der Sensoranordnung (50; 75) angeordnet ist, dass bei einer Stellung des Ventilglieds (22; 73) innerhalb eines vorbestimmten Erfassungsbereichs (57) ein magnetischer Kreis (56; 79) von dem Magneten (54; 64; 76) über das Ventilglied (22; 73) zu der Sensoranordnung (50; 75) gebildet wird, so dass die Sensoranordnung (50; 75) ein die Stellung des Ventilglieds (22; 73) in dem Erfassungsbereich (57) repräsentierendes Positionssignal ausgibt, **dadurch gekennzeichnet, dass** die Positionserfassungsvorrichtung ein an dem Gehäuse (45) der fluidtechnischen Ventilanordnung anordenbares Modul aufweist, in dem die Sensoranordnung (50; 75) und der ortsfeste Magnet (54; 64; 76) angeordnet sind und das ein von dem Gehäuse (45) der fluidtechnischen Ventilanordnung separates Gehäuse (46) aufweist.

2. Positionserfassungsvorrichtung nach Anspruch 1, **dadurch gekennzeichnet, dass** sie eine magnetische Leiteranordnung (55; 77) aufweist, über die der magnetische Kreis (56; 79) bei der Stellung des Ventilglieds (22; 73) innerhalb des vorbestimmten Erfassungsbereichs (57) verläuft.

3. Positionserfassungsvorrichtung nach Anspruch 2, **dadurch gekennzeichnet, dass** die magnetische Leiteranordnung (55; 77) zumindest teilweise in dem Modul angeordnet ist.

4. Positionserfassungsvorrichtung nach Anspruch 2 oder 3, **dadurch gekennzeichnet, dass** die magnetische Leiteranordnung (55; 77) mindestens zwei voneinander separate Flussleitelemente (58, 59, 60) aufweist, die über die der magnetischer Kreis (56; 79) von dem Magneten zu dem Ventilglied (22; 73) und von dem Ventilglied (22; 73) zu der Sensoranordnung (50; 75) geführt wird.

5. Positionserfassungsyorrichtung nach einem der vorhergehenden Ansprüche, **dadurch gekennzeichnet, dass** mindestens ein ortsfester Magnet (54; 64; 76; 93; 103) und/oder zumindest teilweise die magnetische Leiteranordnung (55; 77) an der Sensoranordnung (50; 75) angeordnet sind.

6. Positionserfassungsvorrichtung nach einem der vorhergehenden Ansprüche, **dadurch gekennzeichnet, dass** zumindest ein ortsfester Magnet (54; 64; 76; 93; 103) unmittelbar an der Sensoranordnung (50; 75) angeordnet ist.

7. Positionserfassungsvorrichtung nach einem der vorhergehenden Ansprüche, **dadurch gekennzeichnet, dass** zumindest Teile der magnetischen Leiteranordnung (55; 77) und/oder die Sensoranordnung (50; 75) am Gehäuse (45) der fluidtechnischen Ventilanordnung (13, 15; 72) angeordnet sind.

8. Positionserfassungsvorrichtung nach einem der vorhergehenden Ansprüche, **dadurch gekennzeichnet, dass** sie zumindest teilweise in axialer Verlängerung des Ventilglieds (22; 73) anordenbar oder angeordnet ist.

9. Positionserfassungsvorrichtung nach einem der vorhergehenden Ansprüche, **dadurch gekennzeichnet, dass** die Sensoranordnung (50; 75) zur Erfassung mindestens einer Endposition des Ventilglieds (22; 73) und/oder der Geschwindigkeit des Ventilglieds (22; 73) und/oder eines Abstandes des ventilglieds (22; 73) von einer vorbestimmten Position und/oder zur Erfassung von Schaltzyklen der fluidtechnischen Ventilanordnung (13, 15; 72) ausgestaltet sind.

10. Positionserfassungsvorrichtung nach einem der vorhergehenden Ansprüche, **dadurch gekennzeichnet, dass** das Ventilglied (22; 73) mindestens einen magnetisch leitenden Abschnitt (43, 44, 66) zur Bildung des magnetischen Kreises (56; 79) aufweist.

11. Positionserfassungsvorrichtung nach einem der vorhergehenden Ansprüche, **dadurch gekennzeichnet, dass** sie eine Netzwerk-Schnittstelle (69) zur Übermittlung von Positionssignalen aufweist.

12. Positionserfassungsvorrichtung nach einem der vorhergehenden Ansprüche, **dadurch gekennzeichnet, dass** die Sensoranordnung (50; 75) mindestens einen magnetoresistiven Sensor (51,52;62;75;92;102) und/oder einen Hall-Sensor und/oder einen Reedkontakt enthält.

13. Positionserfassungsvorrichtung nach einem der vorhergehenden Ansprüche, **dadurch gekennzeichnet, dass** die fluidtechnische Ventilanordnung (13, 15; 72) als ein Ventilmodul (13, 15) ausgestaltet ist, an der die Positionserfassungsvorrichtung als ein Positionserfassungsmodul (14, 16) anordenbar ist.

14. Positionserfassungsvorrichtung nach Anspruch 13, **dadurch gekennzeichnet, dass** das Positionserfassungsmodul (14, 16) und das Ventilmodul (13, 15) in einer Reihenrichtung (31) zu einer fluidtechnischen Ventilbatterie (10) aneinander reihbar sind.

15. Positionserfassungsvorrichtung nach Anspruch 13 oder 15, **dadurch gekennzeichnet, dass** das Positionserfassungsmodul (14, 16) an einem Montageplatz (36-39) der fluidtechnischen Ventilbatterie (10) anordenbar ist, und dass das Positionserfassungsmodul (14, 16) Modul-Kontaktmittel (35) zur Herstellung einer elektrischen Verbindung mit an dem Montageplatz (36-39) vorhandenen Ventilbatterie-Kontaktmitteln (32) aufweist.

16. Positionserfassungsvorrichtung nach Anspruch 15, **dadurch gekennzeichnet, dass** das Positionserfassungsmodul (14, 16) anstelle eines Ventilmoduls (13, 15) an dem Montageplatz (36-399) der fluidtechnischen Ventilbatterie (10) anordenbar ist.

17. Positionserfassungsvorrichtung nach Anspruch 15, **dadurch gekennzeichnet, dass** die Modul-Kontaktmittel zu einer Identifizierung des Positionserfassungsmoduls (14, 16) an einer über die Ventilbatterie-Kontaktmittel (32) herstellbaren Kommunikationsverbindung ausgestaltet sind.

18. Fluidtechnische, insbesondere pneumatische, Ventilanordnung (13, 15; 72) mit mindestens einer Positionserfassungsvorrichtung (14, 16; 70) nach einem der vorhergehenden Ansprüche.

## Claims

1. Position detection device for a fluidic valve assembly (13, 15; 72), with a stationary magnetic sensor assembly (50; 75) for detecting the position of a movable valve member (22; 73) of the valve assembly (13, 15; 72), wherein a stationary magnet (54; 64; 76) is so arranged in the sensor assembly (50; 75) that, when the valve member (22; 73) is positioned within a predetermined detection zone (57), a magnetic circle (56; 79) is formed by the magnet (54; 64; 76) over the valve member (22; 73) to the sensor assembly (50; 75), so that the sensor assembly (50; 75) emits a position signal representing the position of the valve member (22; 73) in the detection zone (57), **characterised in that** the position detection device has a module which may be mounted on the housing (45) of the fluidic valve assembly, in which the sensor assembly (50; 75) and the stationary magnet (54; 64; 76) are located, and which has a housing (46) separate from the housing (45) of the fluidic valve assembly.

2. Position detection device according to claim 1, **characterised in that** it has a magnetic conductor assembly (55; 77), over which the magnetic circle (56; 79) runs when the valve member (22; 73) is positioned within the predetermined detection zone (57).

3. Position detection device according to claim 2, **characterised in that** the magnetic conductor assembly (55; 77) is provided at least partly in the module.

4. Position detection device according to claim 2 or 3, **characterised in that** the magnetic conductor assembly (55; 77) has at least two flux guide elements (58, 59, 60) separate from one another and which are guided over the magnetic circle (56; 79) from the magnet to the valve member (22; 73) and from the valve member (22; 73) to the sensor assembly (50; 75).

5. Position detection device according to any of the preceding claims, **characterised in that** at least one stationary magnet (54; 64; 76; 93; 103) and/or at least partly the magnetic conductor assembly (55; 77) are provided on the sensor assembly (50; 75).

6. Position detection device according to any of the preceding claims, **characterised in that** at least one stationary magnet (54; 64; 76; 93; 103) is located directly on the sensor assembly (50; 75).

7. Position detection device according to any of the preceding claims, **characterised in that** at least parts of the magnetic conductor assembly (55; 77) and/or the sensor assembly (50; 75) are provided on the housing (45) of the fluidic valve assembly (13, 15; 72).

8. Position detection device according to any of the preceding claims, **characterised in that** it may be or is provided at least partly in an axial extension of the valve member (22; 73).

9. Position detection device according to any of the preceding claims, **characterised in that** the sensor assembly (50; 75) is designed to detect at least one end position of the valve member (22; 73) and/or the velocity of the valve member (22; 73) and/or a distance of the valve member (22; 73) from a predetermined position and/or to detect switching cycles of the fluidic valve assembly (13, 15; 72).

10. Position detection device according to any of the preceding claims, **characterised in that** the valve member (22; 73) has at least one magnetically conductive section (43, 44, 66) to form the magnetic circle (56; 79).

11. Position detection device according to any of the preceding claims, **characterised in that** it has a network interface (69) for the transmission of position signals.

12. Position detection device according to any of the preceding claims, **characterised in that** the sensor assembly (50; 75) contains at least one magnetoresistive sensor (51, 52; 62; 75; 92; 102) and/or a Hall sensor and/or a reed contact.

13. Position detection device according to any of the preceding claims, **characterised in that** the fluidic valve assembly (13, 15; 72) is in the form of a valve module (13, 15), to which the position detection device may be fitted as a position detection module (14, 16).

14. Position detection device according to claim 13, **characterised in that** the position detection module (14, 16) and the valve module (13, 15) may be positioned side by side in a direction of lining-up with a fluidic valve bank (10).

15. Position detection device according to claim 13 or 14, **characterised in that** the position detection module (14, 16) may be provided at a mounting location (36-39) of the fluidic valve bank (10), and that the position detection module (14, 16) has module contact means (35) to create an electrical connection with valve bank contact means (32) provided at the mounting location (36-39).

16. Position detection device according to claim 15, **characterised in that** the position detection module (14, 16) may be provided instead of a valve module (13, 15) at the mounting location (36-39) of the fluidic valve bank (10).

17. Position detection device according to claim 15, **characterised in that** the module contact means are designed for identification of the position detection module (14, 16) at a communication link which may be made via the valve bank contact means (32).

18. Fluidic, in particular pneumatic, valve assembly (13, 15; 72) with at least one position detection device (14, 16; 70) according to any of the preceding claims.

## Revendications

1. Dispositif de détection de position pour un ensemble de soupapes (13, 15; 72) relevant de la technique des fluides, comprenant un ensemble de capteurs (50 ; 75) magnétique immobile pour détecter la position d'un organe de soupape (22 ; 73) mobile de l'ensemble de soupapes (13, 15 ; 72), sachant qu'un aimant (54 ; 64 ; 76) immobile est disposé dans le cadre de l'ensemble de capteurs (50 ; 75) de telle manière que, dans le cas d'une position de l'organe de soupape (22 ; 73) à l'intérieur d'une zone de détection (57) prédéfinie, un circuit magnétique (56 ; 79) est formé depuis l'aimant (54 ; 64 ; 76) en passant par l'organe de soupape (22 ; 73) en direction de l'ensemble de capteurs (50 ; 75) de sorte que l'ensemble de capteurs (50 ; 75) émet un signal de position illustrant la position de l'organe de soupape (22 ; 73) dans la zone de détection (57), **caractérisé en ce que** le dispositif de détection de position présente un module pouvant être disposé au niveau du boîtier (45) de l'ensemble de soupapes relevant de la technique des fluides, dans lequel module sont disposés l'ensemble de capteurs (50 ; 75) et l'aimant (54 ; 64 ; 76) immobile, et **en ce qu'**il présente également un boîtier (46) séparé du boîtier (45) de l'ensemble de soupapes relevant de la technique des fluides.

2. Dispositif de détection de position selon la revendication 1, **caractérisé en ce qu'**il présente un ensemble de conducteurs (55 ; 77) magnétique, au-dessus duquel s'étend le circuit magnétique (56 ; 79) dans le cas de la position de l'organe de soupape (22 ; 73) à l'intérieur de la zone de détection (57) prédéfinie.

3. Dispositif de détection de position selon la revendication 2, **caractérisé en ce que** l'ensemble de conducteurs (55 ; 77) magnétique est disposé au moins en partie dans le module.

4. Dispositif de détection de position selon la revendication 2 ou 3, **caractérisé en ce que** l'ensemble de conducteurs (55 ; 77) magnétique présente au moins deux éléments conducteurs de flux (58, 59, 60) séparés l'un de l'autre, par l'intermédiaire desquels le circuit magnétique (56 ; 79) est guidé depuis l'aimant en direction de l'organe de soupape (22 ; 73) et de l'organe de soupape (22 ; 73) en direction de l'ensemble de capteurs (50 ; 75).

5. Dispositif de détection de position selon l'une quelconque des revendications précédentes, **caractérisé en ce qu'**au moins un aimant (54 ; 64 ; 76 ; 93 ; 103) immobile et/ou au moins en partie l'ensemble de conducteurs (55 ; 77) magnétique sont disposés au niveau de l'ensemble de capteurs (50 ; 75).

6. Dispositif de détection de position selon l'une quelconque des revendications précédentes, **caractérisé en ce qu'**au moins un aimant (54 ; 64 ; 76 ; 93 ; 103) immobile est disposé directement au niveau de l'ensemble de capteurs (50 ; 75).

7. Dispositif de détection de position selon l'une quelconque des revendications précédentes, **caractérisé en ce qu'**au moins des parties de l'ensemble de conducteurs (55 ; 77) magnétique et/ou l'ensemble de capteurs (50 ; 75) sont disposés au niveau du boîtier (45) de l'ensemble de soupapes (13, 15 ; 72) relevant de la technique des fluides.

8. Dispositif de détection de position selon l'une quelconque des revendications précédentes, **caractérisé en ce que** le dispositif de détection de position peut être disposé ou est disposé au moins en partie dans le prolongement axial de l'organe de soupape (22 ; 73).

9. Dispositif de détection de position selon l'une quelconque des revendications précédentes, **caractérisé en ce que** l'ensemble de capteurs (50 ; 75) est mis au point pour détection d'au moins une position finale de l'organe de soupape (22 ; 73) et/ou la vitesse de l'organe de soupape (22 ; 73) et/ou une distance entre l'organe de soupape (22 ; 73) et une position prédéfinie et/ou pour la détection des cycles de commutation de l'ensemble de soupapes (13, 15 ; 72) relevant de la technique des fluides.

10. Dispositif de détection de position selon l'une quelconque des revendications précédentes, **caractérisé en ce que** l'organe de soupape (22 ; 73) présente au moins une section à conduction magnétique (43, 44, 66) pour la formation du circuit magnétique (56 ; 79).

11. Dispositif de détection de position selon l'une quelconque des revendications précédentes, **caractérisé en ce que** le dispositif de détection de position présente une interface de réseau (69) pour le transfert des signaux de position.

12. Dispositif de détection de position selon l'une quelconque des revendications précédentes, **caractérisé en ce que** l'ensemble de capteurs (50 ; 75) contient au moins un capteur magnétorésistif (51, 52 ; 62 ; 75 ; 92 ; 102) et/ou un capteur à effet Hall et/ou un contact Reed.

13. Dispositif de détection de position selon l'une quelconque des revendications précédentes, **caractérisé en ce que** l'ensemble de soupapes (13, 15 ; 72) relevant de la technique des fluides est configuré sous la forme d'un module de soupape (13, 15), au niveau duquel le dispositif de détection de position peut être disposé en tant que module de détection de position (14, 16).

14. Dispositif de détection de position selon la revendication 13, **caractérisé en ce que** le module de détection de position (14, 16) et le module de soupape (13, 15) peuvent être alignés dans un sens d'alignement (31) pour former une batterie de soupape (10) relevant de la technique des fluides.

15. Dispositif de détection de position selon la revendication 13 ou 14, **caractérisé en ce que** le module de détection de position (14, 16) peut être disposé au niveau d'un emplacement de montage (36 - 39) de la batterie de soupape (10) relevant de la technique des fluides, et **en ce que** le module de détection de position (14, 16) présente des moyens de mise en contact de module (35) pour l'établissement d'une connexion électrique avec des moyens de mise en contact de batterie de soupape (32) présents au niveau de l'emplacement de montage (36 - 39).

16. Dispositif de détection de position selon la revendication 15, **caractérisé en ce que** le module de détection de position (14, 16) peut être disposé en lieu et place d'un module de soupape (13, 15) au niveau de l'emplacement de montage (36 - 39) de la batterie de soupape (10) relevant de la technique des fluides.

17. Dispositif de détection de position selon la revendication 15, **caractérisé en ce que** les moyens de mise en contact de module sont configurés pour l'identification du module de détection de position (14, 16) au niveau d'une connexion de communication pouvant être établie par l'intermédiaire des moyens de mise en contact de batterie de soupape (32).

18. Ensemble de soupapes (13, 15 ; 72) relevant de la technique des fluides, en particulier pneumatique, comprenant au moins un dispositif de détection de position (14, 16 ; 70) selon l'une quelconque des revendications précédentes.
